# EUROPÄISCHE PATENTANMELDUNG

(11) **EP 2 230 351 A1**
(43) Veröffentlichungstag der Anmeldung: **22.09.2010**
(21) Anmeldenummer: 10002723.4
(22) Anmeldetag: 16.03.2010
(51) Int. Cl.: D06P 5/00, B41F 16/02, B41M 5/03, B41M 7/00, D06B 11/00, B41M 5/52, B32B 7/06

(54) **Verfahren zum Bedrucken von textilen Materialien und Transfermaterial**

(30) Priorität: 20.03.2009 DE 102009014211; 22.06.2009 DE 102009030071
(71) Anmelder: Aluminium Féron GmbH & Co. KG, 52355 Düren (DE)
(72) Erfinder: Höls, Lothar, 52355 Düren (DE); Feron, Berthold, 52372 Bergheim (DE)
(74) Vertreter: Hauck Patent- und Rechtsanwälte

(57) **Zusammenfassung**

Es werden ein Verfahren zum Bedrucken von textilen Materialien und ein Transfermaterial beschrieben. Bei dem Verfahren wird ein Druck auf ein Transfermaterial übertragen, und das mit dem Druck versehene Transfermaterial wird heiß unter Druck auf das textile Material aufgebracht. Danach wird eine Trägerschicht des Transfermateriales von der aufgebrachten, den Druck aufnehmenden Schicht des Transfermateriales abgezogen. Als Transfermaterial wird ein solches verwendet, bei dem die Trägerschicht eine Kunststofffolie mit Releaseeigenschaften in Bezug auf die den Druck aufnehmende Schicht ist. Die Trägerschicht wird im abgekühlten Zustand der aufgebrachten, den Druck aufnehmenden Schicht von dieser abgezogen.

## Beschreibung

Die vorliegende Erfindung betrifft ein Verfahren zum Bedrucken von textilen Materialien, insbesondere T-Shirts, bei dem man einen Druck auf ein Transfermaterial, das eine den Druck aufnehmende Schicht und eine Trägerschicht aufweist, überträgt, das mit dem Druck versehene Transfermaterial heiß unter Druck auf das textile Material aufbringt und die Trägerschicht von der aufgebrachten, den Druck aufnehmenden Schicht abzieht.

Ein derartiges Verfahren ist bekannt. Bei diesem bekannten Verfahren findet als Trägerschicht beispielsweise ein Basispapier Verwendung, auf das eine Schicht aus einem thermoplastischen Kunststoff als den Druck aufnehmende Schicht aufkaschiert ist. Auf die den Druck aufnehmende Schicht folgt eine Akzeptorschicht, auf die der Druck aufgebracht wird.

Die Transferierung geschieht hierbei beispielsweise in Bügelpressen bei Temperaturen von 140°C bis 220°C. Das Transfermaterial wird dabei mit dem Druck unter Erhitzen gegen die textile Unterlage gepresst, wobei die Dauer der Transferierung beispielsweise 10 - 60 sec beträgt. Nach der erfolgten Übertragung wird die Trägerschicht (Basispapier) von der den Druck aufweisenden Schicht abgezogen. Dieser Trennvorgang muss hierbei sofort nach Übertragung im noch heißen Zustand vorgenommen werden, da beim Abziehen der Trägerschicht die den Druck aufnehmende Schicht bedingt durch ihre thermoplastischen Eigenschaften in sich gespalten wird, wobei ein Teil dieser Schicht auf dem textilen Material verbleibt, während ein anderer Teil zusammen mit der Trägerschicht (Basispapier) abgezogen wird.

Bei dem bekannten Verfahren erfolgt somit das Abziehen der Trägerschicht sofort nach der Übertragung im noch heißen Zustand, wobei in der den Druck aufweisenden Schicht ein Kohäsionbruch stattfindet, d. h. die Schicht wird in der vorstehend beschriebenen Weise aufgespalten. Bei diesem Verfahren muss somit das noch heiße Material gehandhabt werden, was in der Handhabung Probleme bereiten kann und unerwünscht ist, da Verletzungen auftreten können.

Bei einem anderen Verfahren zum Bedrucken von textilen Materialien, das vornehmlich für dunkle Stoffe eingesetzt wird, finden weiß eingefärbte, sehr opake Lacksysteme Verwendung, die auf Trägermaterialien aufgebracht werden. Nach der Bedruckung dieser Schichten werden die Schichten vom Trägermaterial abgelöst, auf das textile Material aufgelegt und mittels Spiegelpressen transferiert. Dabei werden die zu transferierenden Lacksysteme mit silikonisierten Papieren oder ähnlichen Trennmedien abgedeckt.

Der vorliegenden Erfindung liegt die Aufgabe zugrunde, ein Verfahren der eingangs wiedergegebenen Art zu schaffen, das sich besonders einfach und bequem durchführen lässt.

Diese Aufgabe wird erfindungsgemäß bei einem Verfahren der angegebenen Art dadurch gelöst, dass als Transfermaterial ein solches verwendet wird, bei dem die Trägerschicht eine Kunststofffolie mit einer Oberfläche oder einem aufgebrachten Film mit Releaseeigenschaften in Bezug auf die den Druck aufnehmende Schicht ist, und dass die Trägerschicht im abgekühlten Zustand der aufgebrachten, den Druck aufnehmenden Schicht von dieser abgezogen wird.

Im Gegensatz zu den eingangs geschilderten Verfahren des Standes der Technik findet bei dem erfindungsgemäßen Verfahren ein Transfermaterial Verwendung, das als Trägermaterial eine Kunststofffolie mit in Bezug auf die den Druck aufnehmende Schicht Releaseeigenschaften aufweist. Diese Releaseeigenschaften kann die Kunststofffolie selbst aufweisen, d. h. eine Oberfläche mit Releaseeigenschaften in Bezug auf die den Druck aufnehmende Schicht besitzen, oder die Kunststofffolie kann zusätzlich mit einem Releasefilm versehen sein, der die entsprechenden Eigenschaften aufweist. Diese Oberfläche bzw. dieser Film mit Releaseeigenschaften trägt eine den Druck aufnehmende Schicht, wobei sich die Releaseeigenschaft der Trägerschicht auf diese den Druck aufnehmende Schicht beziehen. Nach der Übertragung des Drucks auf die den Druck aufnehmende Schicht wird das, Transfermaterial unter Druck und Erhitzen auf das textile Material aufgebracht, wobei die den Druck aufnehmende Schicht auf das textile Material transferiert wird. Im Gegensatz zum Stand der Technik wird jedoch die Trägerschicht nunmehr nicht im heißen Zustand abgezogen, sondern erst nach dem Erkalten, d. h. dem abgekühlten Zustand der aufgebrachten, den Druck aufnehmenden Schicht. Hierbei findet keine Aufspaltung der den Druck aufnehmenden Schicht statt, sondern die Trägerschicht (Kunststofffolie) wird an der Trennlinie zwischen Trägerschicht und der den Druck aufnehmenden Schicht bzw. zwischen Releasefilm und der den Druck aufnehmenden Schicht sauber von der den Druck aufnehmenden Schicht abgezogen, wobei hier ein echter Adhäsionsbruch stattfindet. Es ergeben sich daher beträchtliche Handlingsvorteile, da nicht im heißen Zustand gearbeitet werden muss.

Im Gegensatz zum Stand der Technik, bei dem eine innige Verbindung zwischen der Trägerschicht und der den Druck aufnehmenden Schicht gewünscht wird und bei dem beim Abziehen der Trägerschicht ein Teil der den Druck aufnehmenden Schicht mit entfernt wird, findet bei dem erfindungsgemäßen Verfahren ein Transfermaterial Verwendung, bei dem nur eine geringe Haftung zwischen Trägerschicht und der den Druck aufnehmenden Schicht gewünscht wird. Diese Haftung soll gerade ausreichend sein, um ein einwandfreies Handling des Transfermateriales beim Bedrucken und beim Übertragen des Drucks auf das textile Material zu ermöglichen. Um diese geringe Haftung zu erreichen, finden erfindungsgemäß Kunststofffolien Verwendung, die diese Release- bzw. Trenneigenschaften in Bezug auf die den Druck aufnehmende Schicht besitzen, oder zusätzliche Trennfilme mit derartigen Eigenschaften Verwendung. Das hat zur Folge, dass die Trägerschicht im kalten Zustand von der den Druck aufnehmenden Schicht getrennt werden kann, ohne dass hierbei die den Druck aufnehmende Schicht mit entfernt bzw. beschädigt wird.

Vorzugsweise wird bei dem erfindungsgemäßen Verfahren als Transfermaterial ein solches verwendet, bei dem die Trägerschicht auf ihrer von der den Druck aufnehmenden Schicht abgewandten Seite zur Stabilisierung mit einer weiteren Schicht versehen ist. Eine solche Stabilisierungsschicht ist nicht unbedingt erforderlich, wenn eine ausreichend dicke Kunststofffolie als Trägerschicht Verwendung findet (beispielsweise 100 mµ dick), wird aber in der Regel bevorzugt. Als eine derartige weitere Schicht kann beispielsweise eine Papierschicht auf die Kunststofffolie aufkaschiert sein. Die Verbindung zwischen der Trägerschicht und der weiteren Schicht ist dabei so ausgelegt, dass während des Transferierungsvorgangs bzw. Abziehvorgangs der Trägerschicht keine Trennung zwischen Trägerschicht und weiterer Schicht stattfindet.

Das erfindungsgemäße Verfahren hat ferner den Vorteil, dass je nach den Pressbedingungen matte oder glänzende Schichten bei der Transferierung erzeugt werden können. Bei einer ersten Variante des erfindungsgemäßen Verfahrens wird das Transfermaterial bei einer Temperatur aufgebracht, die unter dem Schmelzpunkt des Materiales der Kunststofffolie (Trägerschicht) liegt. Mit diesem Verfahren wird nach der Transferierung eine glänzende Oberfläche der transferierten, den Druck aufweisenden Schicht erzielt, da durch das Erhitzen bei der Transferierung die Kunststofffolie nicht plastifiziert wird, auch nicht teilweise. Die Trägerschicht beeinflusst daher bei dieser Variante die erhaltene Bedruckung nicht.

Bei einer anderen Variante des erfindungsgemäßen Verfahrens wird das Transfermaterial bei einer Temperatur aufgebracht, die über dem Schmelzpunkt des Materiales der Kunststofffolie (Trägerschicht) liegt. Mit dieser Variante wird eine matte Oberfläche der den Druck aufweisenden Schicht erzielt. Dies ist darauf zurückzuführen, dass bei dieser Vorgehensweise zumindest ein Teil der Kunststofffolie (Trägerschicht) angeschmolzen wird und bei der Transferierung mit auf die den Druck aufweisende Schicht übergeht, so dass diese Schicht eine matte Oberfläche erhält. Durch Auswahl der entsprechenden Temperatur beim Transferieren (Bügelpresse) lässt sich daher bei dem erfindungsgemäßen Verfahren das Aussehen bzw. die Strukturierung der auf dem textilen Material verankerten, den Druck aufweisenden Schicht steuern.

Es versteht sich, dass bei dem erfindungsgemäßen Verfahren die den Druck aufnehmende Schicht des Transfermateriales gute Bedruckungseigenschaften aufweist, d. h. für eine Bedruckung durch Laserdruck, Siebdruck, Tintenstrahldruck etc. geeignet ist. Des Weiteren findet bevorzugt eine den Druck aufnehmende Schicht Verwendung, die gute Heißsiegel- und Haftungseigenschaften in Bezug auf textiles Material aufweist. Schließlich sollte diese Schicht auch gute Schutzeigenschaften besitzen, d. h. den auf das textile Material aufgebrachten Druck gegenüber Umwelteinflüssen schützen und diesen reinigungsbeständig bzw. waschbeständig machen.

Die den Druck aufnehmende Schicht kann dabei aus einer einzigen Materialschicht bestehen, welche die vorstehend genannten Eigenschaften aufweist. Sie kann sich jedoch auch aus mehreren Materialschichten, insbesondere zwei Materialschichten, zusammensetzen, beispielsweise eine den Druck aufnehmende Heißsiegelschicht und darunter befindliche Schutzschicht besitzen. Die mit dem Druck versehene Heißsiegelschicht garantiert hierbei eine feste Verankerung der transferierten Schicht im textilen Material, wobei diese Schicht natürlich gut bedruckbar sein muss. Die darunter befindliche Schutzschicht schützt den transferierten Druck und macht diesen wasch- und reinigungsfest.

Vorzugsweise findet als den Druck aufnehmende Schicht eine solche aus Ethylencopolymeren, insbesondere Ethylvinylacetat, Verwendung. Andere geeignete Materialien sind beispielsweise Acrylate, PVC. Bevorzugt wird daher eine heißsiegelfähige Schicht, die die erwähnten Zusatzeigenschaften (gute Bedruckbarkeit, Schutzfunktionen) besitzt.

Finden mehrere Schichten Verwendung, findet vorzugsweise als eigentliche den Druck aufnehmende Schicht eine Polyurethanschicht Verwendung, während die darunter befindliche Schutzschicht vorzugsweise aus Ethylencopolymeren besteht.

Was die Trägerschicht des Transfermaterialen anbetrifft, so finden vorzugsweise thermoplastische Kunststofffolien Verwendung, wobei Polypropylen ein bevorzugtes Material ist.

Mit einer derartigen Polypropylenfolie können, wie vorstehend bereits ausgeführt, je nach Pressbedingungen matte oder glänzende Schichten bei der Transferierung erzeugt werden. Matte Oberflächen resultieren beispielsweise bei einem Erhitzen über 180°C (in der Bügelpresse) und einer Verweilzeit von 30 sec. Glänzende Oberflächen erzielt man bei einem Erhitzen in einem Bereich von 160-180°C (in der Bügelpresse) ebenfalls bei einer Verweilzeit von 30 sec.

Wenn mit einer Temperatur über dem Schmelzpunkt der Kunststofffolie gearbeitet wird (bei Polypropylen ca. 150°C), ist es sinnvoll, die Rückseite der Kunststofffolie (Trägerschicht) mit einer temperaturstabileren Schicht, wie Papier oder Polyesterfolie, abzudecken oder im Vorfeld zu kaschieren. Diese weitere Schicht kann ebenfalls zur mechanischen Stabilisierung dienen, wie vorstehend bereits ausgeführt.

Andere geeignete Kunststofffolien, die als Trägerschicht verwendet werden können, bestehen aus Polyethylen (HDPE, LDPE), Polyamid und Polyester. Wesentlich ist, dass die als Trägerschicht verwendete Kunststofffolie keine Affinität in Bezug auf die den Druck aufnehmende Schicht besitzt. So können beispielsweise handelsübliche Folien Verwendung finden, insbesondere eine handelsübliche Polypropylenfolie.

Um auf die als Trägerschicht verwendete Kunststofffolie auf der von der den Druck aufnehmenden Schicht abgewandten Seite eine weitere Schicht beispielsweise zu mechanischen Stabilisierungszwecken oder Temperaturstabilisierungszwecken aufbringen zu können, findet vorzugsweise eine Trägerschicht (Kunststofffolie) Verwendung, deren von der den Druck aufnehmenden Schicht abgewandte Seite zur Haftungsverbesserung vorbehandelt ist. Eine solche Haftungsverbesserung kann beispielsweise mit einer Coronavorbehandlung erreicht werden.

Falls eine Trägerschicht mit einem speziellen Releasefilm verwendet wird, können für den Releasefilm übliche Materialien eingesetzt werden, beispielsweise auf Stearinsäurebasis oder Silikonbasis.

Ergänzend sei noch darauf hingewiesen, dass neben der Temperatur auch die Verweilzeit bei der Aufbringung des Transfermateriales eine Rolle spielt. So wird beispielsweise bei einer anderen Variante des erfindungsgemäßen Verfahrens das Transfermaterial bei einer Temperatur aufgebracht, die über dem Schmelzpunkt des Materiales der Kunststofffolie liegt, jedoch mit einer Verweildauer, dass der Schmelzpunkt des Materiales der Kunststofffolie nicht erreicht wird. Bei einer noch anderen Variante wird das Transfermaterial bei einer Temperatur und Verweilzeit aufgebracht, dass unter diesen Bedingungen der Schmelzpunkt des Materiales der Kunststofffolie (Releasefolie) erreicht wird. Es kann daher allgemein gesagt werden, dass die Transferbedingungen - zusammengesetzt aus Temperatur und Zeit - ein Aufschmelzen der Trägerschicht bewirken, wobei durch Auswahl der entsprechenden Parameter das Verfahren gesteuert werden kann.

Die vorliegende Erfindung betrifft ferner ein Transfermaterial zur Verwendung in einem Verfahren der vorstehend beschriebenen Art. Ein solches Transfermaterial setzt sich aus einer Trägerschicht und einer den Druck aufnehmenden Schicht zusammen, wobei die Trägerschicht eine Kunststofffolie mit einer Oberfläche oder einem aufgebrachten Film mit Releaseeigenschaften in Bezug auf die den Druck aufnehmende Schicht ist. Ein solches Transfermaterial wird unter Druck heiß auf das zu bedruckende textile Material aufgebracht, wobei die Trägerschicht im kalten bzw. abgekühlten Zustand der transferierten, den Druck aufweisenden Schicht von dieser abgezogen werden kann.

### Beispiel:

Eine handelsübliche Polypropylenfolie mit einer Dicke von 40 µm wird einseitig mittels einer Coronavorbehandlung derart vorbehandelt, dass auf der vorbehandelten Seite eine Oberflächenspannung von >= 38 mN/m resultiert. Die vorbehandelte Seite der oPP-Folie wird in einem weiteren Schritt gegen ein Papier, beispielsweise mit einem Flächengewicht von 120 G/m², unter Zuhilfenahme eines Kaschierklebers, beispielsweise dem Handelsprodukt der Fa. Henkel KG mit der Bezeichnung Liofol UR 2790, der mit einem Härter mit der Bezeichnung Liofol UK 5000 vor der Verarbeitung unter Berücksichtigung der vom Lieferanten vorgeschlagenen Mischungsverhältnisse gemischt wird, kaschiert. Dazu wird die PP-Folie mit dem Kleber derart eingestrichen, dass ein Auftragsgewicht nach dem vollständigen Verdunsten der Lösemittel in einem Trockenschrank bei ca. 80 °C und der entsprechenden Verweilzeit von ca. 8 g/m² resultiert. In einem Kaschierkalander wird die mit Kleber eingestrichene Seite der PP-Folie gegen das Papier unter Druck zwischen Walzen kaschiert. Das nach diesem Verfahren erhaltene Verbundmaterial wird anschließend 2 Wochen unter Raumtemperatur gelagert.

Auf die nicht vorbehandelte Seite des Verbundmateriales wird eine erste Schicht folgender Zusammensetzung aufgetragen:
35,00 g Neocryl XK 90 (Handelsprodukt der Fa. DSM)
5,00 g Acronal 311 S (Handelsprodukt der Fa. BASF)
9,13 g Rheovis 112 (Handelsprodukt dr Fa. Ciba)

Die unter einem Rührer vermischten Komponenten werden in einer Menge auf die PP-Folie aufgetragen, dass ein Auftragsgewicht nach dem Trocknungsprozess in einem Trockenschrank bei 80 °C von ca. 16 g/m² resultiert. Auf diese erste Schicht wird eine zweite Schicht bestehend aus dem Handelsprodukt Aquaseal 1321 (Fa. Paramelt) derart aufgebracht, dass nach dem Trocknungsprozess in einem Trockenschrank bei 80 °C und entsprechender Verweilzeit bis zur vollständigen Verdunstung des Lösemittels ein Auftragsgewicht von ca. 16 g/m² resultiert.

Das aus diesem Verfahren resultierende Transfermaterial wird auf einem Laserdrucker, Typ Samsung 510, bedruckt und kann weiterhin auf einer handelsüblichen Bügelpresse unter unterschiedlichen Bedingungen verarbeitet werden. Dazu wird das Transfermaterial mit der bedruckten Seite auf einen textilen Träger, beispielsweise ein T-Shirt-Stoff, gelegt und unter Temperaturanwendung und Berücksichtigung definierter Verweilzeiten verarbeitet. Im Anschluss an den Pressvorgang lässt man das mit dem textilen Träger verbundene Transfermaterial auf Raumtemperatur abkühlen und zieht das Trägermaterial vom Stoff ab.

Wählt man eine Pressentemperatur von 180 °C bei einer Verweilzeit von 25 s, resultiert ein transferbedruckter Stoff, bei dem die transferierte Fläche eine glänzende Oberfläche aufweist.

Wählt man eine Pressentemperatur von 200 °C bei einer Verweilzeit von 30 s, resultiert ein transferbedruckter Stoff, bei dem die transferierte Fläche eine matte Oberfläche aufweist.

## Patentansprüche

1. Verfahren zum Bedrucken von textilen Materialien, insbesondere T-Shirts, bei dem man einen Druck auf ein Transfermaterial, das eine den Druck aufnehmende Schicht und eine Trägerschicht aufweist, überträgt, das mit dem Druck versehene Transfermaterial heiß unter Druck auf das textile Material aufbringt und die Trägerschicht von der aufgebrachten, den Druck aufnehmenden Schicht abzieht, **dadurch gekennzeichnet, dass** als Transfermaterial ein solches verwendet wird, bei dem die Trägerschicht eine Kunststofffolie mit einer Oberfläche oder einem aufgebrachten Film mit Releaseeigenschaften in Bezug auf die den Druck aufnehmende Schicht ist, und dass die Trägerschicht im abgekühlten Zustand der aufgebrachten, den Druck aufnehmenden Schicht von dieser abgezogen wird.

2. Verfahren nach Anspruch 1, **dadurch gekennzeichnet, dass** als Transfermaterial ein solches verwendet wird, bei dem die Trägerschicht auf ihrer von der den Druck aufnehmenden Schicht abgewandten Seite zur Stabilisierung mit einer weiteren Schicht versehen ist.

3. Verfahren nach Anspruch 1 oder 2, **dadurch gekennzeichnet, dass** das Transfermaterial bei einer Temperatur aufgebracht wird, die unter dem Schmelzpunkt des Materiales der Kunststofffolie liegt.

4. Verfahren nach Anspruch 1 oder 2, **dadurch gekennzeichnet, dass** das Transfermaterial bei einer Temperatur aufgebracht wird, die über dem Schmelzpunkt des Materiales der Kunststofffolie liegt.

5. Verfahren nach Anspruch 1 oder 2, **dadurch gekennzeichnet, dass** das Transfermaterial bei einer Temperatur aufgebracht wird, die über dem Schmelzpunkt des Materiales der Kunststofffolie liegt, jedoch mit einer Verweildauer, dass der Schmelzpunkt des Materiales der Kunststofffolie nicht erreicht wird.

6. Verfahren nach einem der vorgehenden Ansprüche, **dadurch gekennzeichnet, dass** ein Transfermaterial verwendet wird, das eine den Druck aufnehmende Schicht aufweist, die gute Heißsiegel- und Haftungseigenschaften in Bezug auf textiles Material aufweist.

7. Verfahren nach Anspruch 6, **dadurch gekennzeichnet, dass** als den Druck aufnehmende Schicht eine solche aus Ethylencopolymeren, insbesondere Ethylvinylacetat, und/oder Polyesterpolyurethanen verwendet wird.

8. Verfahren nach einem der vorangehenden Ansprüche, **dadurch gekennzeichnet, dass** ein Transfermaterial mit einer aus Polypropylen bestehenden Trägerschicht verwendet wird.

9. Verfahren nach einem der vorangehenden Ansprüche, **dadurch gekennzeichnet, dass** ein Trägermaterial mit einer Trägerschicht verwendet wird, deren von der den Druck aufnehmenden Schicht abgewandte Seite zur Haftungsverbesserung vorbehandelt ist.

10. Verfahren nach einem der vorangehenden Ansprüche, **dadurch gekennzeichnet, dass** ein Transfermaterial mit einer den Druck aufnehmenden Schicht verwendet wird, die sich aus einer den Druck aufnehmenden Heißsiegelschicht und einer darunter befindlichen Schutzschicht zusammensetzt.

11. Transfermaterial zur Verwendung in einem Verfahren nach einem der vorangehenden Ansprüche.
